# EUROPEAN PATENT APPLICATION

(11) **EP 4 503 500 A1**
(43) Date of publication of application: **05.02.2025**
(21) Application number: 22934292.8
(22) Date of filing: 31.03.2022
(51) Int. Cl.: H04L 5/14

(54) **COMMUNICATION METHOD, COMMUNICATION APPARATUS, AND COMMUNICATION DEVICE**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/084694
(87) International publication number: WO 2023/184455

(57) **Abstract**

Embodiments of the invention provide a communication method, and a communication apparatus. The method is performed by a terminal. The method comprises: determining a third frequency domain resource in a downlink (DL) subband according to an indication of a network device; and monitoring a control signaling associated with part or all of a second control resource set on the third frequency domain resource In the present invention, when the network device supports full duplex, the control signaling on the control resource set is not monitored on the frequency domain resource located in the uplink subband, so that the terminal device can accurately obtain a frequency domain position of a control region, thereby ensuring the reliability of the reception of the control signaling.

## Description

### TECHNICAL FIELD

The present disclosure relates to the technical field of wireless communication, and more particularly relates to a communication method, a communication apparatus, and a communication device.

### BACKGROUND

In a full duplex enhancement project of the 3rd generation partnership project (3GPP), a network device supports full duplex, which improves the throughput of a system, reduces a transmission delay (especially in an uplink (UL) transmission) and enhances a UL coverage, and the like.

However, when the network device supports the full duplex, position configuration of a UL subband and a downlink (DL) subband is flexible, and then how a terminal correctly receives a control signaling is a problem to be solved urgently.

### SUMMARY

The present disclosure provides a communication method, a communication apparatus, and a communication device so as to improve the reliability of receiving a control signaling.

According to a first aspect of the present disclosure, a communication method is provided. The method can be applied to a terminal in a communication system. In the communication system, the terminal can communicate with a network device supporting full duplex. The communication method includes: determining by a terminal that a first frequency domain resource is located in an uplink (UL) subband according to an indication of a network device, in which the first frequency domain resource is configured to transmit part or all of a first control resource set; and not monitoring by the terminal a control signaling in a search space associated with the first control resource set on the first frequency domain resource.

In some possible implementations, the above method further includes: determining by the terminal, a second frequency domain resource in a downlink (DL) subband according to the indication of the network device, in which the second frequency domain resource is configured to transmit part or all of the first control resource set; and monitoring by the terminal, the control signaling in the search space associated with the first control resource set on the second frequency domain resource.

In some possible implementations, determining by the terminal, the second frequency domain resource in the DL subband according to the indication of the network device, includes: receiving by the terminal, first indication information from the network device, in which the first indication information indicates a frequency domain position of the second frequency domain resource; and determining by the terminal, the second frequency domain resource in the DL subband according to the first indication information.

In some possible implementations, the first indication information includes: the frequency domain position of the second frequency domain resource or a resource offset of the second frequency domain resource with respect to the first frequency domain resource.

According to a second aspect of the present disclosure, a communication method is provided. The method can be applied to a terminal in a communication system. In the communication system, the terminal can communicate with a network device supporting full duplex. The communication method includes: determining by a terminal, a third frequency domain resource in a DL subband according to an indication of a network device; and monitoring by the terminal, a control signaling associated with part or all of a second control resource set on the third frequency domain resource.

In some possible implementations, before the terminal determines the third frequency domain resource in the DL subband according to the indication of the network device, the above method further includes: determining by the terminal that a fourth frequency domain resource is located in a UL subband according to the indication of the network device, in which the fourth frequency domain resource is configured to transmit part or all of the second control resource set.

In some possible implementations, determining by the terminal, the third frequency domain resource in the DL subband according to the indication of the network device, includes: receiving by the terminal, second indication information from the network device, in which the second indication information indicates a frequency domain position of the third frequency domain resource; and determining by the terminal, the third frequency domain resource in the DL subband according to the second indication information.

In some possible implementations, the second indication information includes: the frequency domain position of the third frequency domain resource or a resource offset of the third frequency domain resource with respect to the fourth frequency domain resource.

In some possible implementations, determining by the terminal, the third frequency domain resource in the DL subband according to the indication of the network device, includes: determining by the terminal, the third frequency domain resource in a plurality of DL subbands which are discontinuous in a frequency domain according to the indication of the network device, in which the third frequency domain resource is configured to transmit part or all of a third control resource set.

In some possible implementations, determining by the terminal, the third frequency domain resource in the plurality of DL subbands which are discontinuous in the frequency domain according to the indication of the network device, includes: receiving by the terminal, third indication information from the network device, in which the third indication information indicates frequency domain positions of the plurality of DL subbands which are discontinuous in the frequency domain and a frequency domain position of the third frequency domain resource; and determining by the terminal, the third frequency domain resource in the plurality of DL subbands which are discontinuous in the frequency domain according to the third indication information.

According to a third aspect of the present disclosure, a communication method is provided. The method can be applied to a network device in a communication system, and the network device supports full duplex. The communication method includes: indicating by a network device, a frequency domain position of a UL subband and a frequency domain position of a first frequency domain resource to a terminal, in which the first frequency domain resource is configured to transmit part or all of a first control resource set; determining by the network device that the first frequency domain resource is located in the UL subband; and not transmitting by the network device, a control signaling in a search space associated with part or all of the first control resource set on the first frequency domain resource.

In some possible implementations, the above method further includes: indicating by the network device, a frequency domain position of a DL subband to the terminal; determining by the network device, a second frequency domain resource in the DL subband, in which the second frequency domain resource is configured to transmit part or all of the first control resource set; and transmitting by the network device, the control signaling in the search space associated with part or all of the first control resource set on the second frequency domain resource.

In some possible implementations, after the network device indicates the frequency domain position of the DL subband to the terminal, the above method further includes: transmitting by the network device, first indication information to the terminal, in which the first indication information indicates a frequency domain position of the second frequency domain resource.

In some possible implementations, the first indication information includes: the frequency domain position of the second frequency domain resource or a resource offset of the second frequency domain resource with respect to the first frequency domain resource.

According to a fourth aspect of the present disclosure, a communication method is provided. The method can be applied to a network device in a communication system, and the network device supports full duplex. The communication method includes: indicating by a network device, a frequency domain position of a DL subband to a terminal; determining by the network device, a third frequency domain resource in the DL subband; and transmitting by the network device, a control signaling in a search space associated with part or all of a second control resource set on the third frequency domain resource.

In some possible implementations, before the network device determines the third frequency domain resource in the DL subband, the above method further includes: indicating by the network device, a frequency domain position of a UL subband and a frequency domain position of a fourth frequency domain resource to the terminal, in which the fourth frequency domain resource is configured to transmit part or all of the second control resource set; and determining by the network device that the fourth frequency domain resource is located in the UL subband.

In some possible implementations, indicating by the network device, the frequency domain position of the DL subband to the terminal, includes: indicating by the network device, frequency domain positions of a plurality of DL subbands which are discontinuous in a frequency domain to the terminal.

In some possible implementations, the above method further includes: transmitting by the network device, second indication information to the terminal, in which the second indication information indicates a frequency domain position of the third frequency domain resource.

In some possible implementations, the second indication information includes: the frequency domain position of the third frequency domain resource or a resource offset of the third frequency domain resource with respect to the fourth frequency domain resource.

According to a fifth aspect of the present disclosure, a communication apparatus is provided. The communication apparatus can be a terminal in a communication system or a chip or a system-on-chip in the terminal, and can also be a functional module used for implementing the method according to various embodiments described above in the terminal. The communication apparatus can implement functions performed by the terminal in various embodiments described above, and these functions can be implemented by hardware executing corresponding software. The hardware or software includes one or more modules corresponding to the functions described above. The communication apparatus includes: a first processing module, configured to determine that a first frequency domain resource is located in a UL subband according to an indication of a network device, in which the first frequency domain resource is configured to transmit part or all of a first control resource set; and a first transmission module, configured to not monitor a control signaling in a search space associated with the first control resource set on the first frequency domain resource.

In some possible implementations, the first processing module is configured to determine a second frequency domain resource in a DL subband according to the indication of the network device, in which the second frequency domain resource is configured to transmit part or all of the first control resource set; and the first transmission module is configured to monitor the control signaling associated with the first control resource set on the second frequency domain resource.

In some possible implementations, the first transmission module is configured to receive first indication information from the network device, in which the first indication information indicates a frequency domain position of the second frequency domain resource; and the first processing module is configured to determine the second frequency domain resource in the DL subband according to the first indication information.

In some possible implementations, the first indication information includes: the frequency domain position of the second frequency domain resource or a resource offset of the second frequency domain resource with respect to the first frequency domain resource.

According to a sixth aspect of the present disclosure, a communication apparatus is provided. The communication apparatus can be a terminal in a communication system or a chip or a system-on-chip in the terminal, and can also be a functional module used for implementing the method according to various embodiments described above in the terminal. The communication apparatus can implement functions performed by the terminal in various embodiments described above, and these functions can be implemented by hardware executing corresponding software. The hardware or software includes one or more modules corresponding to the functions described above. The communication apparatus includes: a second processing module configured to determine a third frequency domain resource in a DL subband according to an indication of a network device; and a second transmission module configured to monitor a control signaling associated with part or all of a second control resource set on the third frequency domain resource.

In some possible implementations, the second processing module is configured to determine that a fourth frequency domain resource is located in a UL subband according to the indication of the network device, before determining the third frequency domain resource in the DL subband according to the indication of the network device, in which the fourth frequency domain resource is configured to transmit part or all of the second control resource set.

In some possible implementations, the second transmission module is configured to receive second indication information from the network device, in which the second indication information indicates a frequency domain position of the third frequency domain resource; and the second processing module is configured to determine the third frequency domain resource in the DL subband according to the second indication information.

In some possible implementations, the second indication information includes: the frequency domain position of the third frequency domain resource or a resource offset of the third frequency domain resource with respect to the fourth frequency domain resource.

In some possible implementations, the second processing module is configured to determine the third frequency domain resource in a plurality of DL subbands which are discontinuous in a frequency domain according to the indication of the network device, in which the third frequency domain resource is configured to transmit part or all of a third control resource set.

In some possible implementations, the second transmission module is configured to receive third indication information from the network device, in which the third indication information indicates frequency domain positions of the plurality of DL subbands which are discontinuous in the frequency domain and the frequency domain position of the third frequency domain resource; and the second processing module is configured to determine the third frequency domain resource in the plurality of DL subbands which are discontinuous in the frequency domain according to the third indication information.

According to a seventh aspect of the present disclosure, a communication apparatus is provided. The communication apparatus can be a network device supporting full duplex in a communication system or a chip or a system-on-chip in the network device, and can also be a functional module used for implementing the method according to various embodiments described above in the network device. The communication apparatus can implement functions performed by the network device in various embodiments described above, and these functions can be implemented by hardware executing corresponding software. The hardware or software includes one or more modules corresponding to the functions described above. The communication apparatus includes: a third transmission module configured to indicate a frequency domain position of a UL subband and a frequency domain position of a first frequency domain resource to a terminal, in which the first frequency domain resource is configured to transmit part or all of a first control resource set; and a third processing module is configured to determine that the first frequency domain resource is located in the UL subband. The third transmission module is further configured to not transmit a control signaling in a search space associated with part or all of the first control resource set on the first frequency domain resource.

In some possible implementations, the third transmission module is configured to indicate a frequency domain position of a DL subband to the terminal; the third processing module is configured to determine a second frequency domain resource in the DL subband, in which the second frequency domain resource is configured to transmit part or all of the first control resource set; and the third transmission module is further configured to transmit the control signaling in the search space associated with part or all of the first control resource set on the second frequency domain resource.

In some possible implementations, the third transmission module is configured to transmit first indication information to the terminal after indicating the frequency domain position of the DL subband to the terminal, in which the first indication information indicates a frequency domain position of the second frequency domain resource.

In some possible implementations, the first indication information includes: the frequency domain position of the second frequency domain resource or a resource offset of the second frequency domain resource with respect to the first frequency domain resource.

According to an eighth aspect of the present disclosure, a communication apparatus is provided. The communication apparatus can be a network device supporting full duplex in a communication system or a chip or a system-on-chip in the network device, and can also be a functional module used for implementing the method according to various embodiments described above in the network device. The communication apparatus can implement functions performed by the terminal in various embodiments described above, and these functions can be implemented by hardware executing corresponding software. The hardware or software includes one or more modules corresponding to the functions described above. The communication apparatus includes: a fourth transmission module, configured to indicate a frequency domain position of a DL subband to a terminal; and a fourth processing module is configured to determine a third frequency domain resource in the DL subband. The fourth transmission module is further configured to transmit a control signaling associated with part or all of a second control resource set on the third frequency domain resource.

In some possible implementations, the fourth transmission module is configured to indicate a frequency domain position of a UL subband and a frequency domain position of a fourth frequency domain resource to the terminal before the fourth processing module determines the third frequency domain resource in the DL subband, in which the fourth frequency domain resource is configured to transmit part or all of the second control resource set; and the fourth processing module is configured to determine that the fourth frequency domain resource is located in the UL subband.

In some possible implementations, the fourth transmission module is configured by the network device to indicate a plurality of DL subbands which are discontinuous in a frequency domain to the terminal.

In some possible implementations, the fourth transmission module is configured to transmit second indication information to the terminal. The second indication information indicates a frequency domain position of the third frequency domain resource.

In some possible implementations, the second indication information includes: the frequency domain position of the third frequency domain resource or a resource offset of the third frequency domain resource with respect to the fourth frequency domain resource.

According to a ninth aspect of the present disclosure, a communication device is provided, such as a terminal. The communication device can include: a memory and a processor, in which the processor is connected to the memory, and configured to implement the communication method according to the first aspect or the second aspect or any one of the possible implementations by executing computer-executable instructions stored on the memory.

According to a tenth aspect of the present disclosure, a communication device is provided, such as a network device supporting full duplex. The communication device can include: a memory and a processor, in which the processor is connected to the memory, and configured to implement the communication method according to the third aspect or the fourth aspect or any one of the possible implementations by executing computer-executable instructions stored on the memory.

According to an eleventh aspect of the present disclosure, a computer-readable storage medium is provided, in which instructions are stored in the computer-readable storage medium. When running on a computer, the instructions are used for executing the communication method according to any one of the first aspect to the fourth aspect or any one of the possible implementations.

According to a twelfth aspect of the present disclosure, a computer program or a computer program product is provided. The computer program product, when executed on a computer, causes the computer to implement the communication method according to any one of the first aspect to the fourth aspect or any one of the possible implementations.

In the present disclosure, on the premise that the network device supports full duplex, when the terminal determines that the first frequency domain resource used for transmitting part or all of the control resource set is located in the UL subband, the first frequency domain resource may not be monitored, so that the terminal can accurately obtain a frequency domain position of a control region, which ensures the reliability of the reception of the control signaling.

It should be understood that the technical solutions of the fifth aspect to the twelfth aspect of the present disclosure are consistent with those of the first aspect to the fourth aspect of the present disclosure, and the various aspects and the corresponding feasible implementations have similar beneficial effects, which will not be described in detail.

### BRIEF DESCRIPTION OF THE DRAWINGS

FIG. 1 is a structural diagram of a communication system in an embodiment of the present disclosure.
FIG. 2 is a flowchart implementing a communication method at a terminal side in an embodiment of the present disclosure.
FIG. 3 is a diagram of a transmission resource in an embodiment of the present application.
FIG. 4 is a diagram of another transmission resource in an embodiment of the present application.
FIG. 5 is a flowchart implementing another communication method at the terminal side in an embodiment of the present disclosure.
FIG. 6 is a flowchart implementing yet another communication method at the terminal side in an embodiment of the present disclosure.
FIG. 7 is a diagram of another transmission resource in an embodiment of the present application.
FIG. 8 is a flowchart implementing a communication method at a network device side in an embodiment of the present disclosure.
FIG. 9 is a flowchart implementing another communication method at the network device side in an embodiment of the present disclosure.
FIG. 10 is a flowchart implementing yet another communication method at the network device side in an embodiment of the present disclosure.
FIG. 11 is a structural diagram of a communication apparatus in an embodiment of the present disclosure.
FIG. 12 is a structural diagram of a communication device in an embodiment of the present disclosure.
FIG. 13 is a structural diagram of a terminal in an embodiment of the present disclosure and
FIG. 14 is a structural diagram of a network device in an embodiment of the present disclosure.

### DETAILED DESCRIPTION

Exemplary embodiments will be described in detail herein, examples of which are illustrated in accompanying drawings. Where the following description refers to the accompanying drawings, the same numbers in different accompanying drawings indicate the same or similar elements, unless otherwise indicated. The implementations described in the following exemplary embodiments do not represent all implementations consistent with the embodiments of the present disclosure. On the contrary, they are merely examples of apparatuses and methods consistent with some aspects of the embodiments of the present disclosure as detailed in the appended claims.

The terms used in the embodiments of the present disclosure are for the purpose of describing particular embodiments only and are not intended to limit the embodiments of the present disclosure. As used in the embodiments and the appended claims of the present disclosure, the singular forms "a/an" and "the/said" are intended to include the plural forms as well, unless the context clearly indicates otherwise. It should also be understood that the term "and/or" as used herein refers to and encompasses any or all possible combinations of one or more associated listed items.

It should be understood that although the terms "first", "second", "third", and the like may be adopted for describing various information in the embodiments of the present disclosure, such information should not be limited to these terms. These terms are only used for distinguishing the information of the same type. For example, "first information" can also be referred to as "second information", and similarly, "second information" can also be referred to as "first information" without departing from the scope of the embodiments of the present disclosure. Depending on the context, the word "if' as used herein can be interpreted as "while", "when" or "in response to determining".

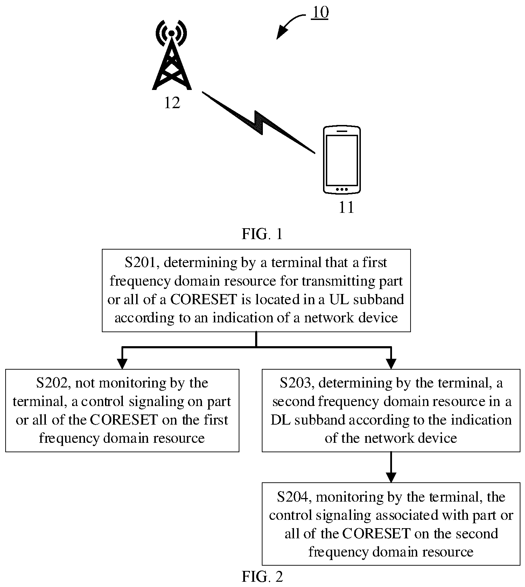

The embodiments of the present disclosure provide a communication system. The communication system can be a communication system adopting a cellular mobile communication technology. FIG. 1 is a structural diagram of a communication system in an embodiment of the present disclosure. With reference to FIG. 1, the communication system 10 can include: a terminal 11 and a network device 12.

In an embodiment, the above terminal 11 can be a device which provides voice or data connectivity for a user. In some embodiments, the terminal can also be referred to as a user equipment (UE), a mobile station, a subscriber unit, a station, or a terminal equipment (TE), and the like. The terminal can be a cellular phone, a personal digital assistant (PDA), a wireless modem (modem), a handheld, a laptop computer, a cordless phone, a wireless local loop (WLL) station or a pad, and the like. With the development of a wireless communication technology, the devices which can access the communication system, can communicate with a network side of the communication system, or can communicate with other devices through the communication system are all the terminals in the embodiments of the present disclosure. For example, the terminals may include terminals and automobiles in intelligent transportation, household devices in intelligent home, electric meter reading instruments, voltage monitoring instruments and environment monitoring instruments in intelligent grids, video monitoring instruments and cash registers in intelligent networks, and the like. In the embodiments of the present disclosure, the terminal can communicate with the network device, and a plurality of terminals can communicate with each another. The terminal can be statically fixed or can also be mobile.

The above network device 12 can be a device used for supporting the terminal to access the communication system at an access network side. For example, the network device 12 can be an evolved NodeB (eNB) in a 4G access technology communication system, a next generation nodeB (gNB) in a 5G access technology communication system, a transmission reception point (TRP), a relay node, an access point (AP), and the like.

In a full duplex enhancement project of the 3rd generation partnership project (3GPP), as transmission and reception are simultaneously performed on one carrier, it is necessary that a transmitting end and a receiving end can better suppress cross-slot interference and self-interference. For the cross-slot interference, it can be measured, avoided and eliminated by a certain mechanism. However, for the self-interference, it is necessary for the device to have relatively high transceiving isolation, so as to achieve relatively strong self-interference suppression capability. Generally, although full duplex can bring about the benefits of improving the throughput, reducing the delay transmission (especially in an uplink (UL) transmission) and enhancing a UL coverage, and the like, in order to minimize the impact on the aspects such as the complexity and the radio frequency of the terminal, only the network device supports full duplex, while the terminal still only supports half duplex.

For example, a full duplex mode of the network device can include the following three cases:
(1) non-overlapping subband, namely, UL information and downlink (DL) information are transmitted on different subbands, and do not overlap with each other in a frequency domain;
(2) partial overlapping subband, namely, UL information and DL information are transmitted on different subbands, and there is a partial overlap between these subbands in the frequency domain; and
(3) shared spectrum full duplex, namely, UL information and DL information can be transmitted on completely overlapping frequency domain resources.

It can be seen that when the network device supports the full duplex, a UL subband for transmitting UL information and a DL subband or transmitting DL information can be flexibly configured. Then, for this situation, how the terminal correctly receives a control signaling is a problem to be solved urgently.

In an embodiment of the present disclosure, a control region (such as a control resource set (CORESET)) used for transmitting a control signaling is configured by the network device for the terminal via a high-layer signaling, which may include the following information: a CORESET ID, frequency domain configuration information of the CORESET, and other relevant information.

For example, the above high-layer signaling can include: a radio resource control (RRC) signaling, broadcast messages, system messages, a medium access control (MAC) control element (CE) signaling, a signaling carried by DCI or PDSCH, and the like.

In order to solve the above problems, the embodiments of the present disclosure provides a communication method which can be applied to the terminal, such as the UE, according to one or more embodiments described above.

It should be noted that in the embodiments of the present disclosure, the CORESET is an example of the control region, and the above communication method is described by this example. In the embodiment below, the first control resource set and the second control resource set both can be understood as the CORESET.

FIG. 2 is a flowchart implementing a communication method at a terminal side in an embodiment of the present disclosure. With reference to FIG. 2, the method can include the following steps at S201-S202.

At S201, the terminal determines that a first frequency domain resource used for transmitting part or all of a CORESET (namely, a first control resource set) is located in a UL subband according to an indication of a network device.

It should be understood that the network device indicates a frequency domain position of the UL subband and a frequency domain position of the first frequency domain resource to the terminal by the high-layer signaling. According to the frequency domain position of the UL subband and the frequency domain position of the first frequency domain resource, the terminal can determine that the frequency domain resource (namely, the first frequency domain resource) used for transmitting part or all of the CORESET is located in the UL subband. At this moment, the first frequency domain resource is not available and cannot be used for transmitting part or all of the CORESET.

In some possible implementations, one CORESET can include one or more resource blocks (RBs) in the frequency domain. The first frequency domain resource can be used for transmitting one CORESET. The first frequency domain resources carrying different CORESETs can be located in different subbands.

At S202, the terminal does not monitor, on the first frequency domain resource, a control signaling on part or all of the CORESET.

Herein, the control signaling on the CORESET refers to a control signaling in a search space (SS) associated with the CORESET.

It should be understood that the UL subband is used for transmitting UL information and cannot transmit the CORESET. Then, after determining that the first frequency domain resource is located in the UL subband at S201, the terminal determines that the first frequency domain resource is not available, and at this moment, the step at S202 is executed, i.e., not monitoring, on the first frequency domain resource, the control signaling in the SS associated with part or all of the CORESET.

In practical applications, one CORESET can be associated with a plurality of SSs, while one SS is associated with one CORESET.

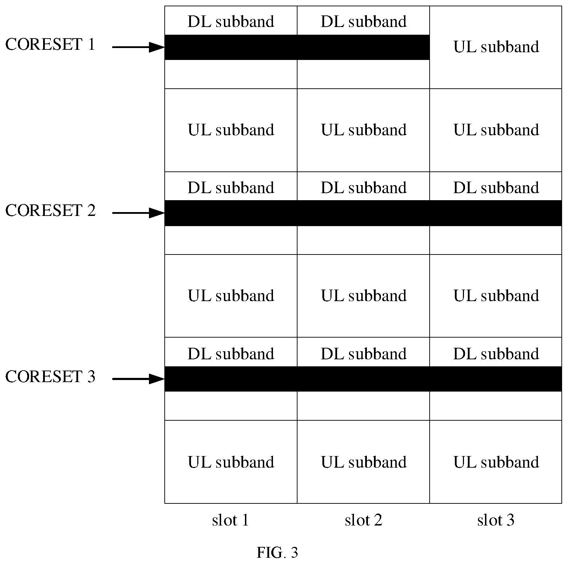

For example, FIG. 3 is a diagram of a transmission resource in an embodiment of the present application. With reference to FIG. 3, CORESET1, CORESET2 and CORESET3 are respectively transmitted in different first frequency domain resources, in which a part of frequency domain resources (namely, the frequency domain resource on the slot3) carrying the CORESET1 is located in the UL subband, and at this moment, the terminal does not monitor, on the frequency domain resource, the SS associated with the CORESET1.

To this end, when the network device supports the full duplex, after determining that the frequency domain resource used for transmitting part or all of the CORESET is located in the UL subband, the terminal determines that the control region is not on the frequency domain resource, and does not monitor, on the frequency domain resource, the control signaling in the SS associated with part or all of the CORESET. In this way, the frequency domain position of the control region is accurately determined, and the reliability of the reception of control information is thus ensured.

In some possible implementations, also with reference to FIG. 2, after the step at S202, the above method can further include the steps at S203 to S204.

At S203, the terminal determines a second frequency domain resource in a DL subband according to the indication of the network device.

It should be understood that the network device can also indicate a frequency domain position of the DL subband to the terminal. Then, after determining that the first frequency domain resource is not available at S201, the terminal can determine the second frequency domain resource from other frequency domain resources in the DL subband according to the indication of the network device or the agreement of a communication protocol. Herein, the second frequency domain resource can be used for transmitting part or all of the CORESET.

In an embodiment, the terminal can determine the second frequency domain resource according to the agreement of a communication protocol. For example, the communication protocol can provide that one or more frequency domain resources other than the first frequency domain resource can be used for transmitting part or all of the CORESET, and the terminal can use the one or more frequency domain resources as the second frequency domain resources. Or, a resource offset (such as RB_offset) can be provided in the communication protocol, and the terminal can determine the second frequency domain resource with the RB_offset from a center frequency point of the first frequency domain resource as a base.

In another embodiment, the terminal can determine the second frequency domain resource according to the indication of the network device. For example, the terminal receives first indication information from the network device, in which the first indication information indicates a frequency domain position of the second frequency domain resource, and then the terminal determines the second frequency domain resource according to the first indication information. In practical applications, the first indication information can include: the frequency domain position of the second frequency domain resource (such as a center frequency point of the second frequency domain resource), a resource offset (such as RB_offset) of the second frequency domain resource with respect to the first frequency domain resource, and the like.

Of course, the terminal can determine the second frequency domain resource in other manners, which are not specifically limited in the embodiments of the present disclosure.

At S204, the terminal monitors, on the second frequency domain resource, the control signaling associated with part or all of the CORESET.

It should be understood that after determining the second frequency domain resource, the terminal can monitor, on the second frequency domain resource, the control signaling in the SS associated with part or all of the CORESET.

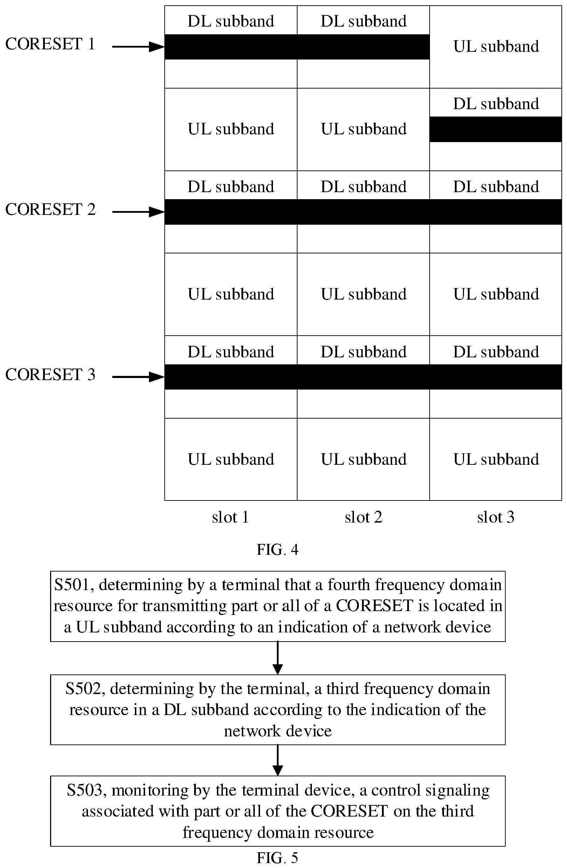

For example, FIG. 4 is a diagram of another transmission resource in an embodiment of the present application. With reference to FIG. 4, CORESET1, CORESET2 and CORESET3 are respectively transmitted in different frequency domain resources, in which a part of the frequency domain resource of the CORESET1 (namely, the frequency domain resource on slot3) is located in an UL subband, and at this moment, the terminal does not monitor, on the frequency domain resource, an SS associated with the CORESET1. Moreover, the terminal determines another frequency domain resource (which can be referred to as a mirror frequency domain resource, such as other DL subbands on slot3) in other DL subbands according to RB_offset indicated by the network device, and monitors, on the mirror frequency domain resource, the control signaling associated with the CORESET.

It should be noted that in the embodiments of the present disclosure, an execution order of the steps at S202 and S203 is not limited, which can be executed sequentially or can also be executed simultaneously.

In the embodiments of the present disclosure, when the network device supports the full duplex, after determining that the frequency domain resource used for transmitting part or all of the CORESET is located in the UL subband, the terminal determines the other frequency domain resource as the control region, and monitors, on the other frequency domain resource, the control signaling in the SS associated with part or all of the CORESET. In this way, the frequency domain position of the control region is accurately determined, and the reliability of the reception of control information is thus ensured.

Based on the same inventive concept, in the embodiments of the present disclosure, a communication method is further provided. The method can be applied to the terminal in the above communication system. In the communication system, the terminal can communicate with a network device supporting full duplex.

FIG. 5 is a flowchart implementing another communication method at the terminal side in an embodiment of the present disclosure. With reference to FIG. 5, the method can include the following steps at S501-S503.

At S501, a terminal determines that a fourth frequency domain resource (equivalent to the above first frequency domain resource) used for transmitting part or all of a CORESET (namely, a second control resource set) is located in an UL subband according to an indication of a network device.

At S502, a terminal determines a third frequency domain resource (equivalent to the above second frequency domain resource) in a DL subband according to the indication of the network device.

At S503, the terminal monitors, on the third frequency domain resource, the control signaling associated with part or all of the CORESET.

It should be noted that, the specific implementation processes of the steps at S501 to S503 may refer to the specific description of the steps at S201, S203 to S204 in the embodiment of FIG. 2, which will not be described in detail herein.

In an embodiment, at S502, the terminal can determine the third frequency domain resource according to the agreement of the communication protocol. For example, the communication protocol can provide that one or more frequency domain resources other than the fourth frequency domain resource can be used for transmitting part or all of the CORESET, and then the terminal can determine the one or more frequency domain resources as the third frequency domain resources. Or, a resource offset (such as RB_offset) can be provided in the communication protocol, and the terminal can determine the third frequency domain resource with the RB_offset from a center frequency point of the fourth frequency domain resource as a base.

In another embodiment, at S502, the terminal can also determine the third frequency domain resource according to the indication of the network device. For example, the terminal receives second indication information from the network device, in which the second indication information indicates a frequency domain position of the third frequency domain resource, and then the terminal determines the third frequency domain resource according to the second indication information. In practical applications, the second indication information can include: the frequency domain position of the third frequency domain resource (such as a center frequency point of the third frequency domain resource), a resource offset (such as RB_offset) of the third frequency domain resource with respect to the fourth frequency domain resource, and the like.

Of course, the terminal can determine the third frequency domain resource in other manners, which are not specifically limited in the embodiments of the present disclosure.

In the embodiments of the present disclosure, when the network device supports the full duplex, after determining that the frequency domain resource used for transmitting part or all of the CORESET is located in the UL subband, the terminal determines the other frequency domain resource as the control region, and monitors, on the frequency domain resource, the control signaling in the SS associated with part or all of the CORESET. In this way, the frequency domain position of the control region is accurately determined, and the reliability of the reception of control information is thus ensured.

Based on the same inventive concept, in the embodiments of the present disclosure, a communication method is further provided. The method can be applied to the terminal in the communication system. In the communication system, the terminal can communicate with a network device supporting full duplex.

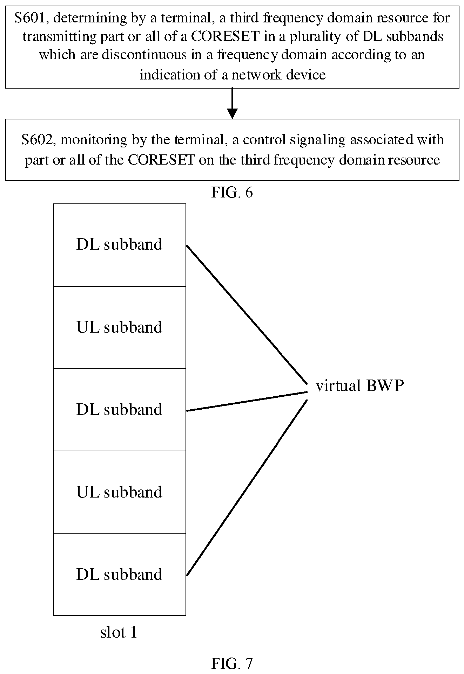

FIG. 6 is a flowchart implementing yet another communication method at the terminal side in an embodiment of the present disclosure. With reference to FIG. 6, the method can include the following steps at S601-S602.

At S601, a terminal determines a third frequency domain resource used for transmitting part or all of a CORESET (namely, the second control resource set) in a plurality of DL subbands which are discontinuous in a frequency domain according to an indication of a network device. Herein, the third frequency domain resource can be located in part or all of subbands in the plurality of DL subbands.

It should be understood that the network device can indicate frequency domain positions of the plurality of DL subbands which are discontinuous in the frequency domain to the terminal by a high-layer signaling or a dynamic signaling. Then, the terminal determines the third frequency domain resource in the plurality of DL subbands according to the indication of the network device or the agreement of the communication protocol.

In an embodiment, at S601 the terminal can determine the third frequency domain resource according to the indication of the network device. For example, the terminal receives third indication information from the network device, in which the third indication information indicates the frequency domain positions of the plurality of DL subbands and the frequency domain position of the third frequency domain resource, and then the terminal determines the third frequency domain resource according to the third indication information. In practical applications, the third indication information can include: the frequency domain positions of the plurality of DL subbands (such as center frequency points of the DL subbands), the center frequency point of one DL subband of the plurality of DL subbands, frequency offsets of other DL subbands with respect to this DL subband, and the like, as well as the frequency domain position of the third frequency domain resource (such as the center frequency point of the third frequency domain resource), a resource offset (such as RB_offset) of the third frequency domain resource with respect to the fourth frequency domain resource, and the like.

At S602, the terminal monitors a control signaling associated with part or all of the CORESET on the third frequency domain resource.

It should be understood that after determining a fifth frequency domain resource, the terminal can monitor the control signaling in the SS associated with part or all of the CORESET on the fifth frequency domain resource.

For example, FIG. 7 is a diagram of another transmission resource in an embodiment of the present application. With reference to FIG. 7, on slot 1, there are five working subbands, in which three are DL subbands and two are UL subbands. The terminal determines frequency domain positions of the three DL subbands according to the indication of the network device via a high-layer signaling. At this moment, the three DL subbands can constitute a virtual bandwidth part (BWP). Then, the terminal uses the frequency domain resources in the three DL subbands as the third frequency domain resources (which can also be referred to as virtual resources) according to the frequency domain positions of the third frequency domain resources. The terminal monitors the control signaling in the SS associated with part or all of the CORESET on the third frequency domain resources in the virtual BWP.

In the embodiments of the present disclosure, when the network device supports the full duplex, the terminal can determine part or all of a plurality of DL subbands as control regions, and monitor the control signaling in the SS associated with the CORESET on the corresponding frequency domain resources. In this way, the frequency domain position of the control region is accurately determined, and the reliability of the reception of control information is thus ensured.

Based on the above embodiments of FIG. 5 and FIG. 6, an embodiment of the present disclosure further provides a communication method which is applied to the above terminal. The method can include: determining by a terminal, a third frequency domain resource in a DL subband according to an indication of a network device; and monitoring by the terminal, a control signaling associated with part or all of a CORESET (namely, the second control resource set) on the third frequency domain resource.

It should be understood that the terminal can determine one or more frequency domain resources in the DL subband according to the frequency domain position of the DL subband indicated by the network device, and these frequency domain resources can be used for transmitting part or all of the CORESET. Then, the terminal determines the third frequency domain resource from the one or more frequency domain resources in the DL subband according to the indication of the network device or the agreement of the communication protocol, and monitors the control signaling associated with part or all of the CORESET on the third frequency domain resource.

Based on the same inventive concept, in the embodiments of the present disclosure, a communication method is further provided, and the method can be applied to the network device in the communication system. In the communication system, the network device supports the full duplex.

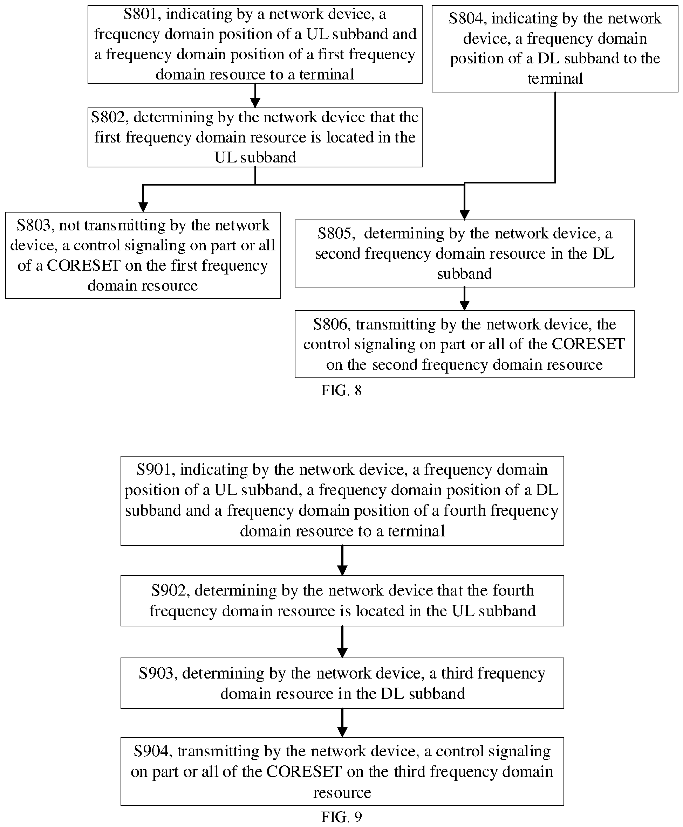

FIG. 8 is a flowchart implementing a communication method at a network device side in an embodiment of the present disclosure. With reference to FIG. 8, the method can include the following steps at S801-S803.

At S801, the network device indicates a frequency domain position of an UL subband and a frequency domain position of a first frequency domain resource to a terminal. The first frequency domain resource is configured to transmit part or all of a CORESET (namely, a first control resource set).

It should be understood that when configuring (including initially configuring or reconfiguring) resources for the terminal, the network device can indicate, via a high-layer signaling or a dynamic signaling to the terminal, the frequency domain position of the UL subband and the frequency domain position of the first frequency domain resource configured for the terminal.

At S802, the network device determines that the first frequency domain resource is located in the UL subband.

At S803, the network device does not transmit a control signaling on part or all of a CORESET on the first frequency domain resource.

In some possible implementations, also with reference to FIG. 8, the above method further includes the following steps at S804-S806.

At S804, the network device indicates a frequency domain position of a DL subband to the terminal.

It should be understood that the network device can also indicate the frequency domain position of the DL subband to the terminal. Optionally, the network device can simultaneously indicate the frequency domain positions of both the UL subband and the DL subband, and can also respectively indicate the frequency domain position of the UL subband and the frequency domain position of the DL subband. That is, the steps at S801 and S804 can be executed simultaneously, and can also be executed separately.

At S805, the network device determines a second frequency domain resource in the DL subband.

At S806, the network device transmit the control signaling on part or all of the CORESET on the second frequency domain resource.

In some possible implementations, after performing the step at S804, the above method further includes: transmitting by the network device, first indication information to the terminal, in which the first indication information indicates a frequency domain position of the second frequency domain resource.

In some possible implementations, the first indication information includes: the frequency domain position of the second frequency domain resource or a resource offset of the second frequency domain resource with respect to the first frequency domain resource.

It should be noted that, the specific implementation processes of the steps at S801 to S806 can refer to the specific description of the steps at S201 to S204 in the embodiment of FIG. 2 for, which will not be described in detail herein.

Based on the same inventive concept, in the embodiments of the present disclosure, a communication method is further provided. The method can be applied to the network device in the communication system. In the communication system, the network device supports the full duplex.

FIG. 9 is a flowchart implementing another communication method at the network device side in an embodiment of the present disclosure. With reference to FIG. 9, the method can include the following steps at S901-S904.

At S901, the network device indicates a frequency domain position of a UL subband, a frequency domain position of a DL subband and a frequency domain position of a fourth frequency domain resource to a terminal.

The fourth frequency domain resource is configured to transmit part or all of a CORESET (namely, the second control resource set).

At S902, the network device determines that the fourth frequency domain resource is located in the UL subband.

At S903, the network device determines a third frequency domain resource in the DL subband.

At S904, the network device transmits a control signaling on part or all of the CORESET on the third frequency domain resource.

In some possible implementations, after performing the step at S902, the above method further includes: transmitting by the network device, second indication information to the terminal, in which the second indication information indicates a frequency domain position of the third frequency domain resource.

In some possible implementations, the second indication information includes: the frequency domain position of the third frequency domain resource or a resource offset of the third frequency domain resource with respect to the fourth frequency domain resource.

It should be noted that, the specific implementation processes of the steps at S901 to S904 can refer to the specific description of the steps at S501 to S503 in the embodiment of FIG. 5, which will not be described in detail herein.

Based on the same inventive concept, in the embodiments of the present disclosure, a communication method is further provided. The method can be applied to the network device in the communication system. In the communication system, the network device supports the full duplex.

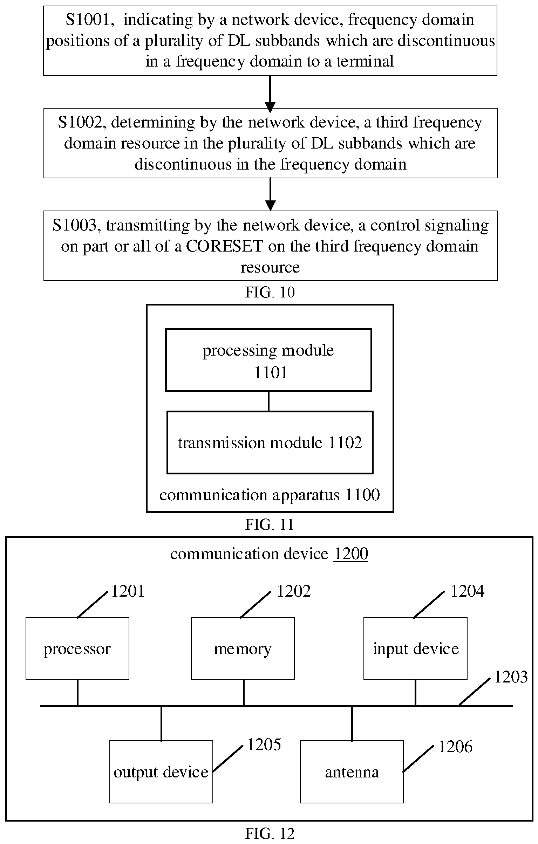

FIG. 10 is a flowchart implementing yet another communication method at the network device side in an embodiment of the present disclosure. With reference to FIG. 10, the method can include the following steps at S1001-S 1003.

S1001, the network device indicates frequency domain positions of a plurality of DL subbands which are discontinuous in a frequency domain to a terminal.

S1002, the network device determines a third frequency domain resource in the plurality of DL subbands which are discontinuous in the frequency domain.

It should be understood that the network device can determine the third frequency domain resource in the plurality of DL subbands which are discontinuous in the frequency domain according to the agreement of a protocol or according its own judgement.

At S1003, the network device transmits a control signaling on part or all of a CORESET (namely, the third control resource set) on the third frequency domain resource.

In some possible implementations, after performing the step at S1002, the above method further includes: transmitting by the network device, second indication information to the terminal, in which the second indication information indicates a frequency domain position of the third frequency domain resource.

In some possible implementations, the second indication information includes: the frequency domain position of the third frequency domain resource or a resource offset of the third frequency domain resource with respect to the fourth frequency domain resource.

It should be noted that, the specific implementation processes of the steps at S1001 to S1003 can refer to the specific description of the steps at S601 to S602 in the embodiment of FIG. 6, which will not be described in detail herein.

Based on the above embodiments of FIG. 9 and FIG. 10, an embodiment of the present disclosure further provides a communication method which can be applied to the above network device. The communication method can include: indicating by the network device, a frequency domain position of a DL subband to a terminal; determining by the network device, a third frequency domain resource in the DL subband; and transmitting by the network device, a control signaling on part or all of the CORESET (namely, the third control resource set) on the third frequency domain resource.

Based on the same inventive concept, an embodiment of the present disclosure provides a communication apparatus. FIG. 11 is a structural diagram of a communication apparatus in an embodiment of the present disclosure. With reference to FIG. 11, the communication apparatus 1100 can include: a processing module 1101 and a transmission module 1102.

In some possible embodiments, the communication apparatus 1100 can be a terminal in a communication system or a chip or a system-on-chip in the terminal, and can also be a functional module used for implementing the method according to various embodiments described above in the terminal. The communication apparatus can implement functions performed by the terminal in various embodiments described above, and these functions can be implemented by hardware executing corresponding software. This hardware or software includes one or more modules corresponding to the functions described above.

Then, the processing module 1101 is configured to determine that a first frequency domain resource is located in a UL subband according to an indication of a network device, in which the first frequency domain resource is configured to transmit part or all of a first control resource set. The transmission module 1102 is configured to not monitor a control signaling in a search space associated with the first control resource set on the first frequency domain resource.

In some possible implementations, the processing module 1101 is configured to determine a second frequency domain resource in a DL subband according to the indication of the network device, in which the second frequency domain resource is configured to transmit part or all of the first control resource set; and the transmission module 1102 is configured to monitor the control signaling associated with the first control resource set on the second frequency domain resource.

In some possible implementations, the transmission module 1102 is configured to receive first indication information from the network device, in which the first indication information indicates a frequency domain position of the second frequency domain resource; and the processing module 1101 is configured to determine the second frequency domain resource in the DL subband according to the first indication information.

In some possible implementations, the first indication information includes: the frequency domain position of the second frequency domain resource or a resource offset of the second frequency domain resource with respect to the first frequency domain resource.

In some possible implementations, the processing module 1101 is configured to determine a third frequency domain resource in a DL subband according to the indication of the network device; and the transmission module 1102 is configured to monitor a control signaling associated with part or all of a second control resource set on the third frequency domain resource.

In some possible implementations, the processing module 1101 is configured to determine that a fourth frequency domain resource is located in a UL subband according to the indication of the network device, before determining the third frequency domain resource in the DL subband according to the indication of the network device, in which the fourth frequency domain resource is configured to transmit part or all of the second control resource set.

In some possible implementations, the transmission module 1102 is configured to receive second indication information from the network device, in which the second indication information indicates a frequency domain position of the third frequency domain resource; and the processing module 1101 is configured to determine the third frequency domain resource in the DL subband according to the second indication information.

In some possible implementations, the second indication information includes: the frequency domain position of the third frequency domain resource or a resource offset of the third frequency domain resource with respect to the fourth frequency domain resource.

In some possible implementations, the processing module 1101 is configured to determine the third frequency domain resource in a plurality of DL subbands which are discontinuous in a frequency domain according to the indication of the network device, in which the third frequency domain resource is configured to transmit part or all of a third control resource set.

In some possible implementations, the transmission module 1102 is configured to receive third indication information from the network device, in which the third indication information indicates frequency domain positions of the plurality of DL subbands which are discontinuous in the frequency domain and the frequency domain position of the third frequency domain resource; and the processing module 1101 is configured to determine the third frequency domain resource in the plurality of DL subbands which are discontinuous in the frequency domain according to the third indication information.

It should be noted that, the specific implementation processes of the processing module 1101 and the transmission module 1102 can refer to the detailed description of the embodiments of FIG. 2 to FIG. 7, which will not be described in detail herein for the sake of brevity of the specification.

In some possible implementations, the communication apparatus 1100 can also be a network device supporting the full duplex in a communication system or a chip or a system-on-chip in the network device, and can also be a functional module used for implementing the method according to various embodiments described above in the network device. The communication apparatus can implement functions performed by the network device in various embodiments described above, and these functions can be implemented by hardware executing corresponding software. This hardware or software includes one or more modules corresponding to the functions described above.

Then, the transmission module 1102 is configured to indicate a frequency domain position of a UL subband and a frequency domain position of a first frequency domain resource to a terminal, in which the first frequency domain resource is configured to transmit part or all of a first control resource set; the processing module 1101 is configured to determine that the first frequency domain resource is located in the UL subband; and the transmission module 1102 is further is configured to not transmit a control signaling in a search space associated with part or all of the first control resource set on the first frequency domain resource.

In some possible implementations, the transmission module 1102 is configured to indicate a frequency domain position of a DL subband to the terminal; the third processing module is configured to determine a second frequency domain resource in the DL subband, in which the second frequency domain resource is configured to transmit part or all of the first control resource set; and the transmission module 1102 is further configured to transmit the control signaling in the search space associated with part or all of the first control resource set on the second frequency domain resource.

In some possible implementations, the transmission module 1102 is configured to transmit first indication information to the terminal after indicating the frequency domain position of the DL subband to the terminal, in which the first indication information indicates a frequency domain position of the second frequency domain resource.

In some possible implementations, the first indication information includes: the frequency domain position of the second frequency domain resource or a resource offset of the second frequency domain resource with respect to the first frequency domain resource.

In some possible implementations, the processing module 1101 is configured to determine a third frequency domain resource in the DL subband; and the transmission module 1102 is further configured to transmit a control signaling associated with part or all of a second control resource set on the third frequency domain resource.

In some possible implementations, the transmission module 1102 is configured to indicate a frequency domain position of a UL subband and a frequency domain position of a fourth frequency domain resource to the terminal, before the processing module 1101 determines the third frequency domain resource in the DL subband, in which the fourth frequency domain resource is configured to transmit part or all of the second control resource set; and the processing module 1101 is configured to determine that the fourth frequency domain resource is located in the UL subband.

In some possible implementations, the transmission module 1102 is configured by the network device to indicate a plurality of DL subbands which are discontinuous in a frequency domain to the terminal.

In some possible implementations, the transmission module 1102 is configured to transmit second indication information to the terminal, in which the second indication information indicates a frequency domain position of the third frequency domain resource.

In some possible implementations, the second indication information includes: the frequency domain position of the third frequency domain resource or a resource offset of the third frequency domain resource with respect to the fourth frequency domain resource.

It should be noted that, the specific implementation processes of the processing module 1101 and the transmission module 1102 can refer to the detailed description of the embodiments of FIG. 8 to FIG. 10, which will not be described in detail herein for the sake of brevity of the specification.

The transmission module 1102 mentioned in the embodiments of the present disclosure can be a receiving interface, a receiving circuit or a receiver, and the like; and the processing module 1101 can be one or more processors.

Based on the same inventive concept, an embodiment of the present disclosure provides a communication device, and the communication device can be the terminal or the network device described in the above one or more embodiments. FIG. 12 is a structural diagram of a communication device in an embodiment of the present disclosure. With reference to FIG. 12, the communication device 1200 adopts general-purpose computer hardware including a processor 1201, a memory 1202, a bus 1203, an input device 1204, and an output device 1205.

In some possible implementations, the memory 1202 can include a computer storage medium in the form of a volatile and/or nonvolatile memory, such as a read-only memory (ROM) and/or a random access memory (RAM). The memory 1202 can store an operating system, an application program, other program modules, executable codes, program data, user data, and the like.

The input device 1204 may be used to input commands and information to the communication device, for example, a keyboard or a pointing device, such as a mouse, a trackball, a touch pad, a microphone, a joystick, a game mat, a satellite television antenna, a scanner, or similar devices. These input devices can be connected to the processor 1201 through the bus 1203.

The output device 1205 can be used by the communication device to output information. In addition to a monitor, the output device 1205 can also be other peripheral output devices, such as a speaker and/or a printing device, and these output devices can also be connected to the processor 1201 through the bus 1203.

The communication device can be connected via an antenna 1206 into a network, for example, a local area network (LAN). In a networked environment, computer-executable instructions stored in a control device can be stored in a remote storage device, and are not limited to being stored locally.

When the processor 1201 in the communication device executes the executable codes or the application program stored in the memory 1202, the communication device executes the communication method at the terminal side or the network device side in the above embodiments. Reference is made to the above embodiments for a specific execution process, which will not be described in detail herein.

In addition, the computer-executable instructions used for implementing the functions of the processing module 1101 and the transmission module 1102 in FIG. 11 are stored in the above memory 1202. The functions/implementation processes of the processing module 1101 and the transmission module 1102 in FIG. 11 both can be implemented by the processor 1201 in FIG. 12 calling the computer-executable instructions stored in the memory 1202, and reference is made to the above related embodiments for the specific implementation processes and functions.

Based on the same inventive concept, an embodiment of the present disclosure provides a terminal, and the terminal is consistent with the terminal described in the above one or more embodiments. Optionally, the terminal can be a mobile phone, a computer, a digital broadcast terminal, a messaging device, a game console, a tablet device, a medical device, a fitness device, a personal digital assistant, and the like.

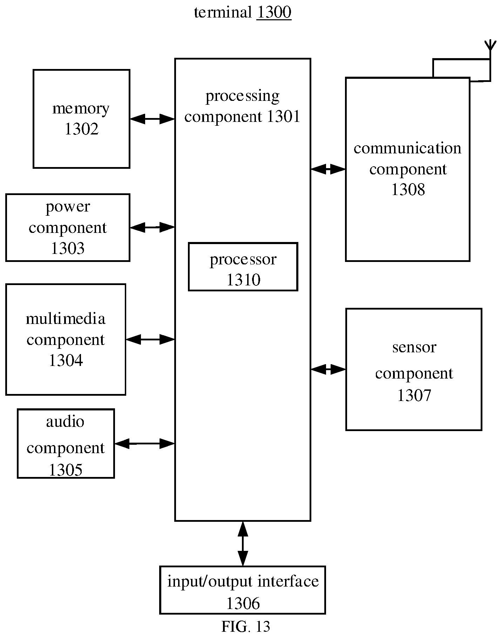

FIG. 13 is a structural diagram of a terminal in an embodiment of the present disclosure. With reference to FIG. 13, the terminal 1300 can include one or more of the following components: a processing component 1301, a memory 1302, a power component 1303, a multimedia component 1304, an audio component 1305, an input/output (I/O) interface 1306, a sensor component 1307, and a communication component 1308.

The processing component 1301 generally controls overall operations of the terminal 1300, such as operations associated with display, telephone calls, data communication, a camera operation, and a recording operation. The processing component 1301 can include one or more processors 1310 for executing instructions to complete all or part of steps of the above method. In addition, the processing component 1301 can include one or more modules to facilitate interactions between the processing component 1301 and other components. For example, the processing component 1301 can include a multimedia module to facilitate interactions between the multimedia component 1304 and the processing component 1301.

The memory 1302 is configured to store various types of data to support operations at the terminal 1300. Examples of these data include instructions of any application program or method used for operating on the terminal 1300, contact data, phonebook data, messages, pictures, videos, and the like. The memory 1302 can be implemented by any type of volatile or nonvolatile memory devices or their combination, such as a static random access memory (SRAM), an electrically erasable programmable read-only memory (EEPROM), an erasable programmable read-only memory (EPROM), a programmable read-only memory (PROM), a ROM, a magnetic memory, a flash memory, a magnetic disk or an optical disk.

The power component 1303 provides electric powers for various components of the terminal 1300. The power component 1303 can include a power management system, one or more power supplies, and other components associated with generating, managing, and distributing electric powers for the terminal 1300.

The multimedia component 1304 includes a screen providing an output interface between the terminal 1300 and a user. In some embodiments, the screen can include a liquid crystal display (LCD) and a touch panel (TP). If the screen includes the touch panel, the screen can be implemented as a touch screen to receive an input signal from the user. The touch panel includes one or more touch sensors to sense touches, slides, and gestures on the touch panel. The touch sensors not only can sense boundaries of touch or slide actions, but also can detect a duration and pressure related to the touch or slide operation. In some embodiments, the multimedia component 1304 includes a front camera and/or a rear camera. When the terminal 1300 is in an operation mode, such as a photographing mode or a video mode, the front camera and/or the rear camera can receive external multimedia data. Each of the front camera and the rear camera can be a fixed optical lens system or have a focal length and an optical zooming capability.

The audio component 1305 is configured to output and/or input audio signals. For example, the audio component 1305 includes a microphone (MIC), and when the terminal 1300 is in an operating mode, such as a calling mode, a recording mode and a voice recognition mode, the microphone is configured to receive external audio signals. The received audio signals can be further stored in the memory 1302 or sent via the communication component 1308. In some embodiments, the audio component 1305 further includes a speaker used for outputting the audio signals.

The I/O interface 1306 provides an interface between the processing component 1301 and peripheral interface modules. The above peripheral interface modules can be keyboards, click wheels, buttons, and the like. These buttons can include, but are not limited to: a home button, a volume button, a start button and a locking button.

The sensor component 1307 includes one or more sensors used for providing state evaluation of various aspects for the terminal 1300. For example, the sensor component 1307 can detect a turning on/off state of the terminal 1300, and relative positioning of the components, for example, the components are a display and a keypad of the terminal 1300. The sensor component 1307 can also detect a change in the position of the terminal 1300 or one component of the terminal 1300, the presence or absence of contact between the user and the terminal 1300, the orientation or acceleration/deceleration of the terminal 1300, and a change in the temperature of the terminal 1300. The sensor component 1307 can include a proximity sensor which is configured to detect the presence of a nearby object without any physical contact. The sensor component 1307 can further include a light sensor, such as a CMOS or CCD image sensor for use in imaging applications. In some embodiments, the sensor component 1307 can further include an acceleration sensor, a gyroscope sensor, a magnetic sensor, a pressure sensor, or a temperature sensor.

The communication component 1308 is configured to facilitate wired or wireless communication between the terminal 1300 and other devices. The terminal 1300 can access a wireless network based on a communication standard, such as Wi-Fi, 2G, or 3G, or a their combination. In an exemplary embodiment, the communication component 1308 receives a broadcast signal or broadcast related information from an external broadcast management system via a broadcast channel. In an exemplary embodiment, the communication component 1308 further includes a near field communication (NFC) module to facilitate short-range communication. For example, the NFC module can be implemented based on a radio frequency identification (RFID) technology, an infra-red data association (IrDA) technology, an ultra-wideband (UWB) technology, a bluetooth (BT) technology, and other technologies.

In an exemplary embodiment, the terminal 1300 can be implemented by one or more application specific integrated circuits (ASICs), a digital signal processor (DSP), a digital signal processing device (DSPD), a programmable logic device (PLD), a field programmable gate array (FPGA), a controller, a microcontroller, a microprocessor, or other electronic elements for performing the above method.

Based on the same inventive concept, an embodiment of the present disclosure provides a network device, and the network device is consistent with the network device in the one or more embodiments described above.

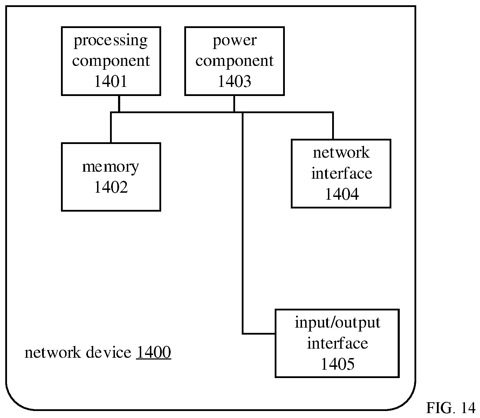

FIG. 14 is a structural diagram of a network device in an embodiment of the present disclosure. With reference to FIG. 14, the network device 1400 can include a processing component 1401 which further includes one or more processors and memory resources represented by a memory 1402 used for storing instructions, such as application programs, executable by the processing component 1401. The application programs stored in the memory 1402 can include one or more modules each corresponding to a set of instructions. In addition, the processing component 1401 is configured to execute the instructions to implement the above method and any one of the foregoing methods applied to the network device.

The network device 1400 can further include a power component 1403 configured to execute power management of the network device 1400, a wired or wireless network interface 1404 configured to connect the network device 1400 to a network, and an input/output (I/O) interface 1405. The network device 1400 can operate based on an operating system stored in the memory 1402, such as Windows Server^{™}, mac OS X^{™}, Unix^{™,} Linux^{™}, FreeBSD^{™}, or the like.

Based on the same inventive concept, an embodiment of the present disclosure further provides a communication system which can include: the terminal and the network device in the one or more embodiments described above, in which the terminal communicates with the network device.

Based on the same inventive concept, an embodiment of the present disclosure further provides a computer-readable storage medium, in which instructions are stored in the computer-readable storage medium; and the instructions, when running on a computer, are used for executing the communication method at the terminal side in the one or more embodiments described above.

Based on the same inventive concept, an embodiment of the present disclosure further provides a computer program or a computer program product, in which the computer program product, when executed on a computer, causes the computer to implement the communication method at the terminal side in the one or more embodiments described above.

Other implementations of the present disclosure will be apparent to those skilled in the art from consideration of the specification and practice of the present disclosure disclosed herein. The present disclosure is intended to cover any variations, uses, or adaptations of the present disclosure, and these variations, uses, or adaptations follow the general principle of the present disclosure and include common knowledge or conventional technical means in the art not disclosed in the present disclosure. It is intended that the specification and embodiments are considered as exemplary only, with a true scope and spirit of the present disclosure being indicated by the following claims.

It should be understood that the present disclosure is not limited to the precise structures described above and shown in the accompanying drawings, and that various modifications and changes can be made without departing from the scope of the present disclosure. The scope of the present disclosure is only limited by the appended claims.

## Claims

1. A communication method comprising:
determining by a terminal that a first frequency domain resource is located in an uplink (UL) subband according to an indication of a network device, wherein the first frequency domain resource is configured to transmit part or all of a first control resource set; and
not monitoring by the terminal a control signaling in a search space associated with the first control resource set on the first frequency domain resource.

2. The method according to claim 1, further comprising:
determining by the terminal a second frequency domain resource in a downlink (DL) subband according to the indication of the network device; and
monitoring by the terminal the control signaling in the search space associated with the first control resource set on the second frequency domain resource.

3. The method according to claim 2, wherein determining by the terminal the second frequency domain resource in the DL subband according to the indication of the network device comprises:
receiving by the terminal first indication information from the network device, wherein the first indication information indicates a frequency domain position of the second frequency domain resource; and
determining by the terminal the second frequency domain resource in the DL subband according to the first indication information.

4. The method according to claim 3, wherein the first indication information comprises: the frequency domain position of the second frequency domain resource or a resource offset of the second frequency domain resource with respect to the first frequency domain resource.

5. A communication method comprising:
determining by a terminal a third frequency domain resource in a downlink (DL) subband according to an indication of a network device; and
monitoring by the terminal a control signaling associated with part or all of a second control resource set on the third frequency domain resource.

6. The method according to claim 5, wherein before the terminal determines the third frequency domain resource in the DL subband according to the indication of the network device, the method further comprises:
determining by the terminal that a fourth frequency domain resource is located in an uplink (UL) subband according to the indication of the network device, wherein the fourth frequency domain resource is configured to transmit part or all of the second control resource set.

7. The method according to claim 6, wherein determining by the terminal the third frequency domain resource in the DL subband according to the indication of the network device comprises:
receiving by the terminal second indication information from the network device, wherein the second indication information indicates a frequency domain position of the third frequency domain resource; and
determining by the terminal the third frequency domain resource in the DL subband according to the second indication information.

8. The method according to claim 7, wherein the second indication information comprises: the frequency domain position of the third frequency domain resource or a resource offset of the third frequency domain resource with respect to the fourth frequency domain resource.

9. The method according to claim 5, wherein determining by the terminal the third frequency domain resource in the DL subband according to the indication of the network device comprises:
determining by the terminal the third frequency domain resource in a plurality of DL subbands which are discontinuous in a frequency domain according to the indication of the network device, wherein the third frequency domain resource is configured to transmit part or all of a third control resource set.

10. The method according to claim 9, wherein determining by the terminal the third frequency domain resource in the plurality of DL subbands which are discontinuous in the frequency domain according to the indication of the network device comprises:
receiving by the terminal third indication information from the network device, wherein the third indication information indicates frequency domain positions of the plurality of DL subbands which are discontinuous in the frequency domain and a frequency domain position of the third frequency domain resource; and
determining by the terminal the third frequency domain resource in the plurality of downlink subbands which are discontinuous in the frequency domain according to the third indication information.

11. A communication method comprising:
indicating by a network device, a frequency domain position of an uplink (UL) subband and a frequency domain position of a first frequency domain resource to a terminal, wherein the first frequency domain resource is configured to transmit part or all of a first control resource set;
determining by the network device that the first frequency domain resource is located in the UL subband; and
not transmitting by the network device a control signaling in a search space associated with part or all of the first control resource set on the first frequency domain resource.

12. The method according to claim 11, further comprising:
indicating by the network device a frequency domain position of a downlink (DL) subband to the terminal;
determining by the network device a second frequency domain resource in the DL subband, wherein the second frequency domain resource is configured to transmit part or all of the first control resource set; and
transmitting by the network device the control signaling in the search space associated with part or all of the first control resource set on the second frequency domain resource.

13. The method according to claim 12, wherein after the network device indicates the frequency domain position of the DL subband to the terminal, the method further comprises:
transmitting by the network device first indication information to the terminal, wherein the first indication information indicates a frequency domain position of the second frequency domain resource.

14. The method according to claim 13, wherein the first indication information comprises: the frequency domain position of the second frequency domain resource or a resource offset of the second frequency domain resource with respect to the first frequency domain resource.

15. A communication method comprising:
indicating by a network device a frequency domain position of a downlink (DL) subband to a terminal;
determining by the network device a third frequency domain resource in the DL subband; and
transmitting by the network device a control signaling in a search space associated with part or all of a second control resource set on the third frequency domain resource.

16. The method according to claim 15, wherein before the network device determines the third frequency domain resource in the DL subband, the method further comprises:
indicating by the network device a frequency domain position of an uplink (UL) subband and a frequency domain position of a fourth frequency domain resource to the terminal, wherein the fourth frequency domain resource is configured to transmit part or all of the second control resource set; and
determining by the network device that the fourth frequency domain resource is located in the UL subband.

17. The method according to claim 15, wherein indicating by the network device the frequency domain position of the DL subband to the terminal comprises:
indicating by the network device frequency domain positions of a plurality of DL subbands which are discontinuous in a frequency domain to the terminal.

18. The method according to claim 15, further comprising:
transmitting by the network device second indication information to the terminal, wherein the second indication information indicates a frequency domain position of the third frequency domain resource.

19. The method according to claim 18, wherein the second indication information comprises: the frequency domain position of the third frequency domain resource or a resource offset of the third frequency domain resource with respect to the fourth frequency domain resource.

20. A communication apparatus comprising:
a first processing module configured to determine that a first frequency domain resource is located in an uplink (UL) subband according to an indication of a network device, wherein the first frequency domain resource is configured to transmit part or all of a first control resource set; and
a first transmission module configured to not monitor a control signaling in a search space associated with the first control resource set on the first frequency domain resource.

21. The apparatus according to claim 20, wherein the first processing module is configured to determine a second frequency domain resource in a downlink (DL) subband according to the indication of the network device, wherein the second frequency domain resource is configured to transmit part or all of the first control resource set; and
the first transmission module is configured to monitor the control signaling associated with the first control resource set on the second frequency domain resource.

22. The apparatus according to claim 21, wherein the first transmission module is configured to receive first indication information from the network device, wherein the first indication information indicates a frequency domain position of the second frequency domain resource; and
the first processing module is configured to determine the second frequency domain resource in the DL subband according to the first indication information.

23. The apparatus according to claim 22, wherein the first indication information comprises: the frequency domain position of the second frequency domain resource or a resource offset of the second frequency domain resource with respect to the first frequency domain resource.

24. A communication apparatus comprising:
a second processing module configured to determine a third frequency domain resource in a downlink (DL) subband according to an indication of a network device; and
a second transmission module configured to monitor a control signaling associated with part or all of a second control resource set on the third frequency domain resource.

25. The apparatus according to claim 24, wherein the second processing module is configured to determine that a fourth frequency domain resource is located in an uplink (UL) subband according to an indication of a network device, before determining the third frequency domain resource in the DL subband according to the indication of the network device, wherein the fourth frequency domain resource is configured to transmit part or all of the second control resource set.

26. The apparatus according to claim 21, wherein the second transmission module is configured to receive second indication information from the network device, wherein the second indication information indicates a frequency domain position of the third frequency domain resource; and
the second processing module is configured to determine the third frequency domain resource in the DL subband according to the second indication information.

27. The apparatus according to claim 26, wherein the second indication information comprises: the frequency domain position of the third frequency domain resource or a resource offset of the third frequency domain resource with respect to the fourth frequency domain resource.

28. The apparatus according to claim 24, wherein the second processing module is configured to determine the third frequency domain resource in a plurality of DL subbands which are discontinuous in a frequency domain according to the indication of the network device, wherein the third frequency domain resource is configured to transmit part or all of a third control resource set.

29. The apparatus according to claim 28, wherein the second transmission module is configured to receive third indication information from the network device, wherein the third indication information indicates frequency domain positions of the plurality of DL subbands which are discontinuous in the frequency domain and the frequency domain position of the third frequency domain resource; and
the second processing module is configured to determine the third frequency domain resource in the plurality of DL subbands which are discontinuous in the frequency domain according to the third indication information.

30. A communication apparatus comprising:
a third transmission module configured to indicate a frequency domain position of an uplink (UL) subband and a frequency domain position of a first frequency domain resource to a terminal, wherein the first frequency domain resource is configured to transmit part or all of a first control resource set; and
a third processing module is configured to determine that the first frequency domain resource is located in the UL subband;
wherein the third transmission module is further configured to not transmit a control signaling in a search space associated with part or all of the first control resource set on the first frequency domain resource.

31. The apparatus according to claim 30, wherein the third transmission module is configured to indicate a frequency domain position of a downlink (DL) subband to the terminal;
the third processing module is configured to determine a second frequency domain resource in the DL subband, wherein the second frequency domain resource is configured to transmit part or all of the first control resource set; and
the third transmission module is further configured to transmit the control signaling in the search space associated with part or all of the first control resource set on the second frequency domain resource.

32. The apparatus according to claim 31, wherein the third transmission module is configured to transmit first indication information to the terminal after indicating the frequency domain position of the DL subband to the terminal, wherein the first indication information indicates a frequency domain position of the second frequency domain resource.

33. The apparatus according to claim 32, wherein the first indication information comprises: the frequency domain position of the second frequency domain resource or a resource offset of the second frequency domain resource with respect to the first frequency domain resource.

34. A communication apparatus comprising:
a fourth transmission module configured to indicate a frequency domain position of a downlink (DL) subband to a terminal; and
a fourth processing module configured to determine a third frequency domain resource in the DL subband;
wherein the fourth transmission module is further configured to transmit a control signaling associated with part or all of a second control resource set on the third frequency domain resource.

35. The apparatus according to claim 34, wherein the fourth transmission module is configured to indicate a frequency domain position of an uplink (UL) subband and a frequency domain position of a fourth frequency domain resource to the terminal before the fourth processing module determines the third frequency domain resource in the DL subband, wherein the fourth frequency domain resource is configured to transmit part or all of the second control resource set; and
the fourth processing module is configured to determine that the fourth frequency domain resource is located in the UL subband.

36. The apparatus according to claim 35, wherein the fourth transmission module is configured by the network device to indicate a plurality of DL subbands which are discontinuous in a frequency domain to the terminal.

37. The apparatus according to claim 34, wherein the fourth transmission module is configured to transmit second indication information to the terminal, wherein the second indication information indicates a frequency domain position of the third frequency domain resource.

38. The apparatus according to claim 37, wherein the second indication information comprises: the frequency domain position of the third frequency domain resource or a resource offset of the third frequency domain resource with respect to the fourth frequency domain resource.

39. A communication device comprising:
an antenna;
a memory; and
a processor respectively connected to the antenna and the memory, configured to control transceiving of the antenna by executing computer-executable instructions stored on the memory, and capable of implementing the communication method according to any one of claims 1 to 14.

40. A communication device comprising:
an antenna;
a memory; and
a processor respectively connected to the antenna and the memory, configured to control transceiving of the antenna by executing computer-executable instructions stored on the memory, and capable of implementing the communication method according to any one of claims 15 to 19.

41. A computer storage medium storing computer-executable instructions, wherein the computer-executable instructions, when executed by the processor, are capable of implementing the communication method according to any one of claims 1 to 19.
